# EUROPEAN PATENT SPECIFICATION

(11) **EP 0 337 818 B1**
(45) Date of publication and mention of the grant of the patent: **18.05.1994**
(21) Application number: 89303746.5
(22) Date of filing: 14.04.1989
(51) Int. Cl.: B65G 11/08, B65G 69/16, B65D 88/54

(54) **Storage containers for storing powdered or granular materials**
Lagerbehälter zum Speichern von pulverförmigen oder körnigen Materialien
Réservoirs de stockage pour emmagasiner des matières pulvérulentes ou granulaires

(30) Priority: 15.04.1988 JP 51101/88
(43) Date of publication of application: 18.10.1989
(73) Proprietor: KABUSHIKI KAISHA MATSUI SEISAKUSHO, Chuoh-Ku Osaka (JP)
(72) Inventor: Morimoto, Kiyoshi, Shizuoka (JP); Iwamoto, Akikazu, Nagaizumi-cho Sunto-gun Shizuoka (JP); Moriyama, Masuo, Numazu-shi Shizuoka (JP); Nakagawa, Junji c/o Osaka Works of K.K., Hirakata-shi Osaka (JP)
(74) Representative: Morton, Colin David

(56) References cited:
- DE-A- 3 631 557
- Soviet Inventions Illustrated, Derwent Publications Ltd., Section Mechanical,week D39, abstract no. K0914, Q34, 4 November 1981& SU-A-793874 (INFUSIBLE MET ALLOY) 10 January 1981

## Description

### Field of the Invention

The present invention relates to a storage container for storing powdered or granular material, according to the preamble of claim 1 (DE-A-3631557), the container being adapted to be charged efficiently with powdered or granular material without causing breakage or fragmentation thereof.

### Prior Art

When powdered or granular materials (such as medicine tablets) are stored within a storage container, it is required that the materials are not subjected to shock at the time of charging.

To prevent this a conventional method employs a shock absorbing member in the shape of a right circular cone placed in a dropping zone for the powdered or granular material within the storage container so as to alleviate shock at the time of charging. However, there is a problem associated with such a method: the storage container has a high storage space and to shorten the dropping distance of the powdered or granular material the shock absorbing member must be placed high in the container, resulting in a dead space (not charged with the powdered or granular material) being present below the shock absorbing member in such manner as to prevent efficient use of the capacity of the storage container.

DE-A-3631557 discloses a storage container for storing powdered or granular material, having a zigzagged chute with side walls having openings therein to allow the material to enter the surrounding container. The present invention provides such a container with a chute having a different arrangement of openings in relation to slant plates on the chute.

### Summary of the Invention

The present invention is directed to solving the problem noted above, and has for its object to provide a storage container for storing a powdered or granular material, in which it is possible to alleviate the shock of the powdered or granular material at the time of charging as well as to store the powdered or granular material efficiently by making effective use of the capacity of the storage container without the formation of dead spaces therewithin.

According to the invention there is provided a storage container for storing powdered or granular material, comprising a zigzagged chute provided at its upper end with an inlet for receiving the powdered or granular material and at its lower end with an outlet for discharging the material, the chute having a zigzagged passage for guiding the dropping of the material, and said storage container including a storage container body for storing the material and accommodating the zigzagged chute therewithin, the zigzagged chute including a plurality of slant plates extending downwardly and inwardly of said chute alternately from two opposed side walls of the chute, the slant plates extending over a centreline of the chute so as to prevent the material dropping vertically into the bottom of the said chute, opposed side walls of the chute being provided with a plurality of outlets for discharging the material, characterised in that the slant plates are arranged, in a vertical direction, alternately in sequence with the outlets which open alternately on the said opposed side walls of the chute from which the slant plates extend, in such a way that, in the vertical downward direction, each slant plate on one of the opposed side walls is followed by an outlet on the same side wall, the outlets ending above the following slant plate, and in that the upper portion of the chute above the uppermost slant plate is provided with at least one additional outlet for discharging the material from the chute into the top of the container body.

### Brief Description of the Drawings

Figure 1 is a perspective view of the zigzagged chute to be disposed within a storage container body for storing powdered or granular materials according to the present invention;
Figure 2 is a vertical sectional view of the zigzagged chute shown in Figure 1;
Figure 3 is an exploded perspective view of the zigzagged chute provided with an inlet member to be inserted thereinto for receiving the powdered or granular materials;
Figure 4 is a vertical sectional view of a storage container for storing powdered or granular materials according to the present invention;
Figure 5 is a vertical sectional view of an alternative zigzagged chute; and
Figure 6 is a vertical sectional view of a principal part of the storage container showing the mounting of the chute shown in Figure 5.

### Detailed Description of the Drawings

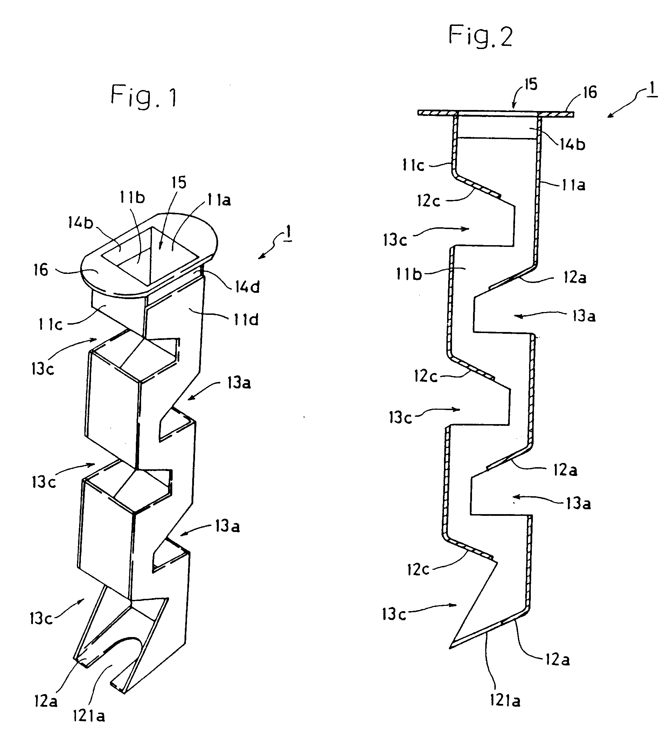

Figures 1 and 2 are a perspective view and a sectional view both of which show a zigzagged chute 1.

The zigzagged chute 1 comprises a square duct provided with four side walls 11a, 11b, 11c, 11d made of synthetic resin plates such as low density polythylene or the like, the opposed side walls 11a, 11c of which are provided with a plurality of slant plates 12a, 12c projecting inwardly and downwardly and slanting alternately so as to form a zigzagged passage for guiding the dropping of powdered or granular material. The slant angles of these slant plates 12a, 12c are substantially the same as the angle of repose of the granular material so as not to produce a dead space below the respective slant plates 12a, 12c. The projecting lengths of the slant plates 12a, 12c are such that the leading end of each slant plate 12a, 12c extends over the medial plane of the chute 1 between the opposed side walls 11a, 11c in order to prevent the powdered or granular material from dropping vertically down the medial plane from the top end to the lowermost end of the chute 1. The lowermost slant plate 12a is provided with a concave cutout portion 121a which is used for insertion of a top portion of a shock absorbing member configured as a right circular cone which will be described later.

The chute 1 is provided with a plurality of discharge outlets 13a, 13c below the respective slant plates 12a, 12c except the lowermost one 12a.

The discharge outlets 13a on one side wall 11a of the chute 1 are formed by cutting out the side wall 11a and both side walls 11b, 11d adjacent thereto, and the discharge outlets 13c on the other side wall 11c of the chute 1 are formed by cutting out the opposite side wall 11c and both side walls 11b, 11d adjacent thereto. Specifically, each discharge outlet 13a, 13c is formed like a sawtooth in a front view having its upper edge inclined along the slant plate 12a, 12c and its lower edge made horizontal.

The lowermost discharge outlet 13c has a different configuration from the other ones, namely it is formed largely by cutting out from the side walls 11b, 11d areas like right-angled triangles. Both these side walls 11b, 11d are provided at their upper end portions with additional outlets 14b, 14d for discharging the powdered or granular material. Further, the chute 1 is provided at its upper end with a flange 16 surrounding the inlet 15 for receiving the powdered or granular material.

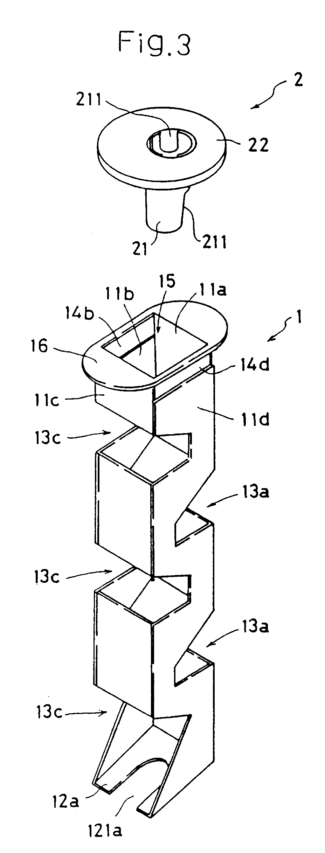

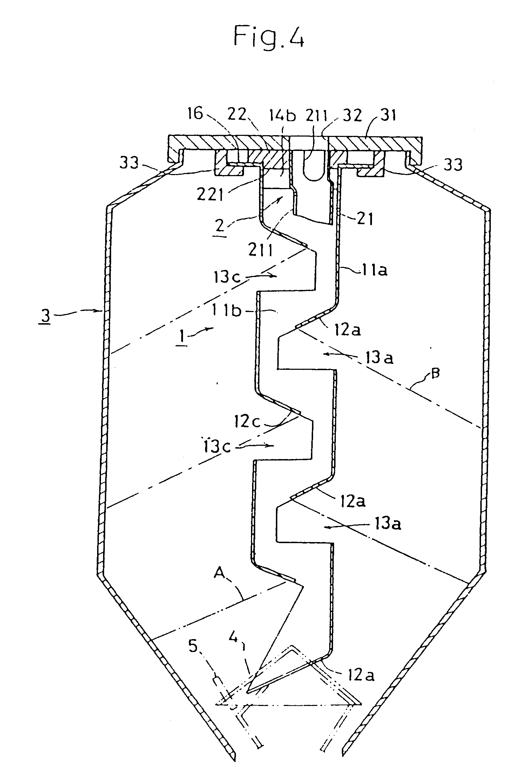

Into the inlet 15 formed at the upper end of the zigzagged chute 1 constituted as mentioned above, is releasably inserted an inlet member 2 for receiving the powdered or granular material. The member 2 preferably has a configuration as shown in Figures 3 and 4. The member 2 comprises a support plate 22 and a guide tube 21 fitted into a hole opened in the support plate 22 eccentrically. The guide tube 21 is provided at its upper and lower portions with a plurality of slivered openings 211, for discharging the powdered or granular materials. The support plate 22 is provided on its underside with a projection 221 to be fitted into the inlet 15 formed at the upper end of the chute 1. The member 2 is adapted to be inserted into the inlet 15 so that the lower end of the guide tube 21 is positioned below the discharge outlets 14b, 14d formed at the upper end portion of the chute 1.

Accordingly, as shown in Figure 4, the storage container for storing the powdered or granular materials is constituted by mounting the zigzagged chute 1 within the storage container body 3 in such a manner that the projection 221 formed on the underside of the support plate 22 of the member 2 is fitted into the inlet 15, formed at the upper end of the zigzagged chute 1 with the guide being inserted into the inlet 15; the zigzagged chute 1 is supported by the container body 3 through a top cover 31 for the body 3 with the flange 16 of the chute 1 being held at its opposite peripheral portions by means of corresponding support rails 33, 33 projecting downwardly from the underside of the cover 31 on the opposed sides of an inlet opening 32 formed in the top cover 31; the support plate 22 of the member 2 is fixedly secured to the top cover 31 by means of fasteners, and the concave cutout portion 121a formed in the lowermost slant plate 12a of the zigzagged chute 1 is fitted onto the top portion of the shock absorbing member 4 configured as a right circular cone and placed in the bottom of the storage container body 3.

When the powdered or granular material is supplied though the inlet opening 32, it passes through the guide tube 21 of the member 2 and then drops, tracing the zigzag course formed by the slant plates 12a, 12c, so as to be discharged through the lowermost outlet 13c onto the upper surface of the shock absorbing member 4 and stored within the storage container body 3. While the powdered or granular material drops in this zigzag course, an increase in dropping speed is prevented so that the material is not subjected to a large shock and prevented from being broken or fragmented. The above-mentioned arrangement is particularly advantageous for tablets. Hard tablets engage the uppermost slant plate 12c and are prevented from passing through the outlet 14b.

The powdered or granular material discharged through the lowermost discharge outlet 13c as noted above can be heaped up whilst maintaining an angle of repose on the bottom of the storage container body 3, as shown by a phantom line A in Figure 4. When the lowermost discharge outlet 13c is covered up, the material is heaped up within the chute 1. And then, when the material is heaped up to the lower edge of the discharge outlet 13a second from the lowermost one 13c, the material is discharged from the discharge outlet 13a and heaped up as shown by a phantom line B until the discharge outlet 13a is covered up. Thereafter, similarly the powdered or granular material is discharged from the discharge outlets 13c, 13a in turn from the lower ones so as to be heaped up within the storage container body 3. Meanwhile, when the uppermost discharge outlet 12a is covered up, the powdered or granular material is heaped up to the upper end of the chute 1 therewithin so as to cover up the lower end opening of the guide tube 21 of the member 2, the material being discharged from the discharge openings 211 of the guide tube 21 and from the outlets 14b, 14d formed at the upper end portion of the chute 1 to the major peripheral space of the storage container body 3. Accordingly, the powdered or granular material can be stored within the storage container body 3 almost without gaps. Further, since the respective slant plates 12a, 12c are inclined at the same angle as that of repose or at an angle a little less than that, dead spaces are not produced below the respective slant plates 12a, 12c.

If the shock absorbing member 4 made as a right circular cone is not placed on the bottom of the storage container body 3, as shown in Figure 4, it is desirable to prevent the powdered or granular material from directly hitting against the inner surface of the storage container body 3 by disposing a shock absorbing plate 5 made of synthetic resin such as low density polyethylene or the like in front of the lowermost slant plate 12a as a bottom plate of the zigzagged chute 1. Various ways can be adopted for mounting the zigzagged chute 1 within the storage container body 3. For example, support pins may be secured to the underside of the top cover 31 on the opposite sides of the inlet opening 32 and the flange 16 of the zigzagged chute 1 anchored to the support pins.

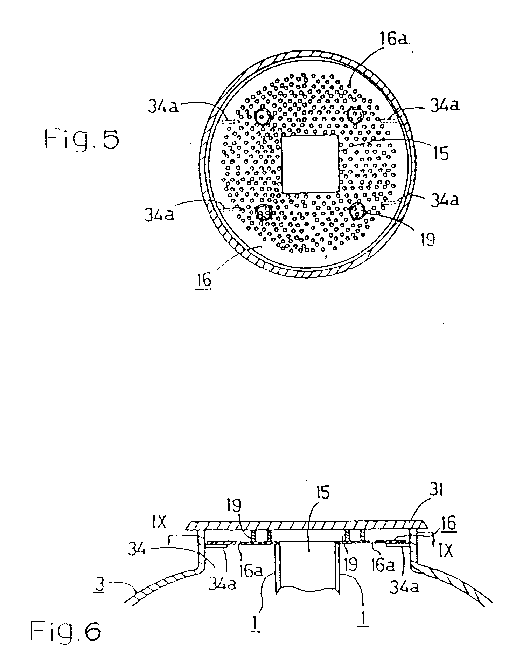

In Figures 5 and 6, the flange 16 of the zigzagged chute 1 is formed like a disc and is mounted as an inner cover of the storage container body 3 by engaging this flange 16 with four pins 34a projecting from an inner circumferential surface of a mouth 34 of the container body 3. The flange 16 is provided with a great number of punched holes 16a for air vents and also provided at its suitable locations (at its four locations spaced apart equidistantly around the inlet opening 15), with rubber rings 19 so as to be presssed by the top cover 31 therethrough. An induction member may be employed, if needed.

A storage container of this type is particularly effective if the capacity of the storage container is large. The powdered or granular material is intentionally prevented from being broken and fragmented when the air within the storage container body is necessarily vented during the transportation.

Some of the many advantages of the present invention should now be apparent. Since the shock to which the material is subjected at the time of reception is considerably reduced, the material can be stored without being broken and fragmented within the storage container body. And since almost no dead space is left within the storage container body during the storage of the powdered or granular material, nearly 100% of the storage capacity can be utilised.

In the storage container of Figures 1 to 4, which has the inlet member inserted into the inlet formed at the top end of the zigzagged chute, since the powdered or granular material is prevented from springing out through the discharge outlets formed at the upper portions of the side wall of the zigzagged chute even though the material has a large coefficient of repulsion, it can be prevented from being broken and fragmented. Especially, this storage container is very effective as a storage container for medicine tablets having a large coefficient of repulsion.

## Claims

1. A storage container for storing powdered or granular material, comprising a zigzagged chute (1) provided at its upper end with an inlet (15) for receiving the powdered or granular material and at its lower end with an outlet (121a) for discharging the material, the chute (19 having a zigzagged passage for guiding the dropping of the material, and said storage container including a storage container body (3) for storing the material and accommodating the zigzagged (1) chute therewithin, the zigzagged chute (1) including a plurality of slant plates (12a, 12c) extending downwardly and inwardly of said chute (1) alternately from two opposed side walls of the chute (1), the slant plates extending over a centreline of the chute (1) so as to prevent the material dropping vertically into the bottom of the said chute (1), opposed side walls of the chute (1) being provided with a plurality of outlets (13a, 13c) for discharging the material, characterised in that the slant plates are arranged, in a vertical direction, alternately in sequence with the outlets which open alternately on the said opposed side walls of the chute (1) from which the slant plates extend, in such a way that, in the vertical downward direction, each slant plate on one of the opposed side walls is followed by an outlet on the same side wall, the outlets ending above the following slant plate, and in that the upper portion of the chute (1) above the uppermost slant plate is provided with at least one additional outlet (14b, 14d) for discharging the material from the chute into the top of the container body (3).

2. A storage container for storing powdered or granular material according to claim 1, characterised in that the zigzagged chute (1) is detachably equipped with an inlet member (2) for receiving the material, the inlet member (2) includng a guide tube (21) having a plurality of discharge openings (211) formed in its tube wall, and the guide tube (2) is inserted into the inlet (15) formed at the top end of the chute (1).

3. A storage container according to claim 1, wherein the container body surrounds the chute with all round clearance.

## Patentansprüche

1. Ein Lagerbehälter zum Lagern von pulver- oder granulatformigem Material mit einem an seinem oberen Ende mit einem Einlaß (15) zur Aufnahme des pulver- oder granulatförmigen Materials und an seinem unteren Ende mit einem Auslaß (121a) zum Abgeben des Materials versehenen zickzackförmigen Schacht (1), der einen zickzackförmigen Durchgang zum Führen des Falls des Materials aufweist, und wobei der Lagerbehälter einen Lagerbehälterkörper (3) zum Lagern des Materials und zur Aufnahme des zickzackförmigen Schachtes (1) aufweist, der eine Vielzahl von abwechselnd von seinen beiden sich gegenüberliegenden Seitenwänden nach unten und nach innen und schräg verlaufenden Platten (12a, 12c) aufweist, die über eine Mittellinie des Schachtes (1) verlaufen, um ein vertikales Herabfallen des Materials auf den Boden des Schachtes (1) zu vermeiden, und sich gegenüberliegende Seitenwände des Schachtes (1) zum Abgeben des Materials mit einer Vielzahl von Auslässen (13a, 13c) versehen sind, dadurch gekennzeichnet, daß die schrägverlaufenden Platten in einer Vertikalrichtung abwechselnd in Folge mit den Auslässen angeordnet sind, die abwechselnd auf den sich gegenüberliegenden Seitenwänden des Schachtes (1), von denen die schrägverlaufenden Platten ausgehen, in solcher Weise offen sind, daß jede schrägverlaufende Platte in der vertikalen Abwärtsrichtung auf einer der sich gegenüberliegenden Seitenwände von einem Auslaß auf der gleichen Seitenwand gefolgt wird, die Auslässe oberhalb der folgenden schrägverlaufenden Platte enden und daß der obere Abschnitt des Schachtes (1) oberhalb der obersten schrägverlaufenden Platte mit mindestens einem zusätzlichen Auslaß (14b, 14d) zum Abgeben des Materials aus dem Schacht in das obere Ende des Behälterkörpers (3) versehen ist.

2. Lagerbehälter zum Lagern von pulver- oder granulatformigem Material nach Anspruch 1, dadurch gekennzeichnet, daß der zickzackförmige Schacht (1) mit einem Einlaßglied (2) zur Aufnahme des Materials lösbar ausgerüstet ist, das Einlaßglied (2) ein Führungsrohr (21) mit einer Vielzahl von in seiner Rohrwand ausgebildeten Abgabeöffnungen (211) einschließt und das Führungsrohr (21) in den an dem oberen Ende des Schachtes (1) ausgebildeten Einlaß (15) eingeführt ist.

3. Lagerbehälter nach Anspruch 1, wobei der Behälterkörper den Schacht mit einem insgesamt runden Freiraum umschließt.

## Revendications

1. Un réservoir de stockage pour stocker une matière pulvérulente ou granulaire, comprenant une goulotte en zigzag (1) comportant à son extrémité supérieure une entrée (15) destinée à recevoir la matière pulvérulente ou granulaire, et à son extrémité inférieure une sortie (121a) pour évacuer la matière, la goulotte (1) ayant un passage en zigzag pour guider la chute de la matière, et le réservoir de stockage comprenant un corps de réservoir de stockage (3) pour stocker la matière et recevoir à l'intérieur la goulotte en zigzag (1), la goulotte en zigzag (1) comprenant un ensemble de plaques inclinées (12a, 12c) s'étendant vers le bas et vers l'intérieur de la goulotte (1), alternativement à partir de deux parois latérales opposées de la goulotte (1), les plaques inclinées s'étendant au-delà d'un axe central de la goulotte (1) de façon à empêcher que la matière ne tombe verticalement au bas de la goulotte (1), des parois latérales opposées de la goulotte (1) comportant un ensemble de sorties (13a, 13c) pour l'évacuation de la matière, caractérisé en ce que les plaques inclinées sont disposées, dans une direction verticale, selon une séquence alternée avec les ouvertures qui s'ouvrent alternativement sur les parois latérales opposées de la goulotte (1) à partir desquelles les plaques inclinées s'étendent, d'une manière telle que, dans la direction verticale descendante chaque plaque inclinée sur l'une des parois latérales opposées soit suivie par une sortie sur la même paroi latérale, les sorties se terminant au-dessus de la plaque inclinée suivante, et en ce que la partie supérieure de la goulotte (1) se trouvant au-dessus de la plaque inclinée la plus élevée comporte au moins une sortie supplémentaire (14b, 14d) pour évacuer la matière à partir de la goulotte vers la partie supérieure du corps du réservoir (3).

2. Un réservoir de stockage pour stocker une matière pulvérulente ou granulaire selon la revendication 1, caractérisé en ce que la goulotte en Zigzag (1) est équipée de façon amovible d'un élément d'entrée (2) destiné à recevoir la matière, l'élément d'entrée (2) comprenant un tube de guidage (21) ayant un ensemble d'ouvertures d'évacuation (211) formées dans sa paroi de tube, et le tube de guidage (2) étant introduit dans l'entrée (15) qui est formée à l'extrémité supérieure de la goulotte (1).

3. Un réservoir de stockage selon la revendication 1, dans lequel le corps du réservoir entoure la goulotte avec un dégagement tout autour de celle-ci.
